(19)

Europäisches
Patentamt
European
Patent Office
Office européen
des brevets

(11) **EP 4 421 916 A1**

(12) **EUROPEAN PATENT APPLICATION**
published in accordance with Art. 153(4) EPC

(43) Date of publication:
**28.08.2024 Bulletin 2024/35**

(21) Application number: **21962112.5**

(22) Date of filing: **17.11.2021**

(51) International Patent Classification (IPC):
*H01M 4/58* (2010.01)

(52) Cooperative Patent Classification (CPC):
Y02E 60/10

(86) International application number:
**PCT/CN2021/131275**

(87) International publication number:
**WO 2023/070768 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2021 PCT/CN2021/126213**

(71) Applicant: **Ningde Amperex Technology Limited
Ningde, Fujian 352100 (CN)**

(72) Inventor: **ZHOU, Molin
Ningde, Fujian 352100 (CN)**

(74) Representative: **Icosa
83 avenue Denfert-Rochereau
75014 Paris (FR)**

(54) **LITHIUM-ION SECONDARY BATTERY, BATTERY MODULE, BATTERY PACK, AND ELECTRIC APPARATUS**

(57)     This application discloses a lithium-ion secondary battery, a battery module, a battery pack, and an electrical device. The lithium-ion secondary battery includes a positive electrode plate, a negative electrode plate, a separator, and an electrolyte solution. The positive electrode plate includes a positive current collector and a positive electrode material layer disposed on at least one surface of the positive current collector. The positive electrode material layer includes a first positive electrode material represented by the following Formula (1) and a second positive electrode material represented by the following Formula (2). The electrolyte solution includes vinylene carbonate. A content of the vinylene carbonate based on a total mass of the electrolyte solution is greater than or equal to 0.1 wt% and less than or equal to 5 wt%.

$$Li_{1+x}Fe_yMn_zM_{1-y-z}PO_{4-t}A_t \qquad (1)$$

(In General Formula (1), M includes one or more of Ti, Zr, V, or Cr; A includes one or more of S, N, F, Cl, or Br; and x, y, z, and t satisfy: $-0.1 \leq x < 0.1$, $0 < y \leq 1$, $0 \leq z < 1$, $0 < y + z \leq 1$, and $0 \leq t < 0.2$.)

$$Li_{2+r}Ni_{0.5-p}Cu_{0.5-q}Ti_vN_{p+q-v}O_{2-s}B_s \qquad (2)$$

(In General Formula (2), N includes one or more of Mn, Fe, Co, Al, V, Cr, or Nb; B includes one or more of S, N, F, Cl, or Br; and r, p, q, v, and s satisfy: $-0.2 \leq r \leq 0.2$, $-0.5 < p < 0.5$, $-0.5 < q < 0.5$, $0 < v < 0.01$, $0 \leq p + q - v < 0.2$, and $0 \leq s < 0.2$)

FIG. 1

EP 4 421 916 A1

## Description

### TECHNICAL FIELD

This application relates to a lithium-ion secondary battery, a battery module, a battery pack, and an electrical device.

### BACKGROUND

During a first charge-discharge cycle of a lithium-ion secondary battery, a solid electrolyte interface (SEI) is formed on a surface of a negative electrode of the battery, thereby causing an irreversible loss of capacity, and in turn, reducing an energy density of the lithium-ion energy storage device. In a device that uses graphite as an negative electrode material, approximately 10% of an active lithium source is consumed in the first charge-discharge cycle. In a device that uses a high-specific-capacity negative electrode material such as an alloy (silicon or tin alloy or the like), an oxide (silicon oxide, tin oxide, or the like), or amorphous carbon, the consumption of the active lithium source is further increased. Therefore, finding an appropriate lithium supplementing method is of great significance to further increasing the energy density of the lithium-ion secondary battery.

For this purpose, a method for supplementing lithium for the negative electrode by using lithium powder such as stabilized lithium metal powder (SLMP, stabilized lithium metal powder) is put forward in the industry. However, although this method can increase the energy density of the battery, the lithium metal powder is of very high reactivity and is prone to react with moisture in the air, thereby posing a severe safety hazard. In a production process, a nonaqueous organic solvent that does not react with lithium is required to be used, and the control on moisture is also extremely stringent, thereby increasing the difficulty of the process.

In view of the great challenges encountered by the negative electrode lithium supplementation policy, a positive electrode lithium supplementation method is safer and easier to operate, and has drawn more and more attention from the industry. For example, Patent Document 1 discloses a positive electrode lithium-supplementing material based on a lithium-oxygen compound, a lithium source, and alkyl lithium. However, a decomposition potential of the lithium-containing compound in the material is relatively high, and oxygen and other by-products are generated in the decomposition process, thereby shortening the battery life.

In addition, known lithium-supplementing materials include a $Li_2NiO_2$ lithium-supplementing material. However, a very high content of free lithium exists on the surface of such a material, and is very prone to cause gelation of a slurry during mixing of the slurry, thereby drastically impairing the processability. In addition, during the first charging cycle, a large amount of active lithium is intercalated into the negative electrode, thereby leading to a further decrease in the true potential of the negative electrode. Moreover, this makes reduction reactions of the solvent in an electrolyte solution occur continuously on the negative electrode, thereby resulting in a continuous increase in impedance, and in turn, impairing the cycle performance of the battery.

Prior art literature

Patent literature

Patent document 1: CN104037418A

### SUMMARY

This application is developed in view of the above situation, and an objective of this application is to provide a lithium-ion secondary battery capable of achieving a balanced high level of energy density, cycle life, C-rate performance, and the like.

To achieve the above objective, this application provides a lithium-ion secondary battery. The lithium-ion secondary battery includes a positive electrode plate, a negative electrode plate, a separator, and an electrolyte solution.

The positive electrode plate includes a positive current collector and a positive electrode material layer disposed on at least one surface of the positive current collector.

The positive electrode material layer includes a first positive electrode material represented by the following General Formula (1) and a second positive electrode material represented by the following General Formula (2).

The electrolyte solution includes vinylene carbonate.

A content of the vinylene carbonate based on a total mass of the electrolyte solution is greater than or equal to 0.1 wt% and less than or equal to 5 wt%.

$$Li_{1+x}Fe_yMn_zM_{1-y-z}PO_{4-t}A_t \qquad (1)$$

(In General Formula (1), M includes one or more of Ti, Zr, V, or Cr; A includes one or more of S, N, F, Cl, or Br; and x, y, z, and t satisfy: $-0.1 \leq x < 0.1$, $0 < y \leq 1$, $0 \leq z < 1$, $0 < y + z \leq 1$, and $0 \leq t < 0.2$.)

$$Li_{2+r}Ni_{0.5-p}Cu_{0.5-q}Ti_vN_{p+q-v}O_{2-s}B_s \qquad (2)$$

(In General Formula (2), N includes one or more of Mn, Fe, Co, Al, V, Cr, or Nb; B includes one or more of S, N, F, Cl, or Br; and r, p, q, v, and s satisfy: $-0.2 \leq r \leq 0.2$, $-0.5 < p < 0.5$, $-0.5 < q < 0.5$, $0 < v < 0.01$, $0 \leq p + q - v < 0.2$, and $0 \leq s < 0.2$)

As used in the positive electrode plate, the positive electrode material layer includes both the first positive electrode material and the second positive electrode material. The second positive electrode material forms a solid solution that exhibits a lower phase transformation energy barrier, a higher purity, and a higher specific capacity than an existing $Li_2NiO_2$ lithium-supplementing material. The second positive electrode material coordinates with the first positive electrode material of an olivine structure to effectively improve the energy density, cycle life, and C-rate performance of the lithium-ion secondary battery. In addition, by adding a specified amount of vinylene carbonate additive into the electrolyte solution, the electrolyte solution can be synergistic with the first positive electrode material and the second positive electrode material of this application to form a more uniform and denser SEI film at the negative electrode after the first-cycle charging, thereby suppressing continuous loss of active lithium and further improving the cycle life of the lithium-ion secondary battery.

In some embodiments, in General Formula (2), p, q, and v satisfy: $-0.1 < p < 0.1$, $-0.1 < q < 0.1$, and $0.002 \leq v \leq 0.008$. By making p, q, and v satisfy the specified ranges, the content of free lithium on the surface of the material can be further reduced, and the problem of gelation of the positive electrode slurry can be greatly alleviated, thereby achieving a more balanced high level of energy density, cycle life, and C-rate performance.

In some embodiments, the positive electrode plate satisfies the following Formula (3):

$$0.5 \leq R \cdot P/Q \leq 16 \qquad (3)$$

(In Formula (3), R represents a resistance of the positive electrode plate, in units of $\Omega$; P represents a compaction density of the positive electrode plate, in units of $g/cm^3$; and Q represents a single-side areal density of the positive electrode plate, in units of $g/1540.25\ mm^2$.)

By making the positive electrode plate satisfy Formula (3) above, the energy density, C-rate performance, and cycle life of the lithium-ion secondary battery can be further improved.

In some embodiments, the positive electrode plate further satisfies the following Formula (4):

$$1.5 \leq R \cdot P/Q \leq 10 \qquad (4)$$

By making the positive electrode plate further satisfy Formula (4) above, the energy density, C-rate performance, and cycle life of the lithium-ion secondary battery can be even further improved.

In some embodiments, the resistance of the positive electrode plate satisfies: $R \leq 3\ \Omega$, and optionally satisfies: $R \leq 1\ \Omega$. By making the resistance of the positive electrode plate fall within the specified range, the cycle performance and C-rate performance of the lithium-ion secondary battery are improved.

In some embodiments, the compaction density P of the positive electrode plate satisfies: $1.6 < P < 2.6$ (in units of $g/cm^3$). By making the compaction density P of the positive electrode plate fall within the specified range, the migration of electrons and ions in the positive electrode plate is facilitated, thereby improving the cycle performance of the lithium-ion secondary battery.

In some embodiments, the single-side areal density Q of the positive electrode plate satisfies: $0.16 < Q < 0.45$ (in units of $g/1540.25\ mm^2$). By making the single-side areal density Q of the positive electrode plate fall within the specified range, the cycle performance and C-rate performance of the lithium-ion secondary battery can be improved at the same time as ensuring a high level of charge capacity and discharge capacity.

In some embodiments, a mass ratio between the first positive electrode material and the second positive electrode material is 5: 1 to 99: 1, and optionally 9: 1 to 99: 1. By making the mass ratio between the first positive electrode material and the second positive electrode material fall within the specified range, the first positive electrode material accounts for a larger proportion of the combination of the first positive electrode material and the second positive electrode material, and the positive electrode plate is of higher structural stability, thereby reducing capacity loss and impedance increase caused by structural disruption of the positive electrode material, and maintaining a high level of cycle stability and kinetic performance.

In some embodiments, in the positive electrode material layer, a percentage by weight of the first positive electrode material is 80 wt% to 98 wt%, and optionally 85 wt% to 98 wt%. By making the weight percent of the first positive electrode material in the positive electrode material layer fall within the specified range, the positive electrode plate is of even higher structural stability, thereby further reducing capacity loss and impedance increase caused by structural disruption of the positive electrode material, and improving the cycle stability and kinetic performance.

A crystal structure of the second positive electrode material belongs to an orthorhombic *Immm* space group.

In some embodiments, in an X-ray diffraction pattern of the second positive electrode material after first-cycle charging, a characteristic diffraction peak A is exhibited at 36° to 38°, a characteristic diffraction peak B is exhibited at 42° to 44°, and a characteristic diffraction peak C is exhibited at 62° to 64°.

A second aspect of this application provides a battery module. The battery module includes the secondary battery according to the first aspect of this application.

A third aspect of this application provides a battery pack. The battery pack includes the battery module according to the second aspect of this application.

A fourth aspect of this application provides a device. The device includes at least one of the secondary battery according to the first aspect of this application, the battery module according to the second aspect of this application, or the battery pack according to the third aspect of this application.

The battery module, the battery pack, and the device of this application each include the secondary battery according to this application, and therefore, exhibit at least the same advantages as the secondary battery.

## BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is an X-ray diffraction pattern of a positive electrode plate of a lithium-ion secondary battery obtained in Embodiment 1 and tested after first-cycle charging.

## DETAILED DESCRIPTION OF EMBODIMENTS

To make the objectives, technical solutions, and advantages of this application clearer, the following describes some embodiments of this application in detail with reference to accompanying drawings. However, a person of ordinary skill in the art understands that such embodiments are just intended to expound rather than limit the technical solutions hereof. Any and all modifications, equivalent replacements, improvements, and the like made without departing from the essence and principles of this application still fall within the protection scope of this application.

For brevity, some specific numerical ranges are disclosed herein. However, any lower limit may be combined with any upper limit to form an unspecified range, any lower limit may be combined with any other lower limit to form an unspecified range, and any upper limit may be combined with any other upper limit to form an unspecified range. In addition, although not explicitly stated, any point and any single numerical value between end points of a range are included in the range. In addition, each separately disclosed point or single numerical value may be used as a lower limit or upper limit to combine with any other point or other single numerical value or with any other lower or upper limit to form an unspecified range.

It is hereby noted that in the description herein, unless otherwise specified, a range defined by a numerical value qualified by "at least" or "at most" includes this numerical value, and the word "more" in the phrase "one or more of" means at least two.

The above summary of this application is not intended to describe every disclosed embodiment or every implementation of this application. The following description exemplifies illustrative embodiments in more detail. In several places throughout this application, guidance is provided through a series of embodiments. The embodiments may be used in various combinations. In each instance, an enumerated list serves merely as a representative list, but is not to be construed as an exclusive list.

To solve the above problems in the prior art, after in-depth research the applicant hereof finds that: by compounding the existing $Li_2NiO_2$ lithium-supplementing material with Cu, Ti, and other optional metal elements, the second positive electrode material forms a solid solution that exhibits a lower phase transformation energy barrier, a higher purity, and a higher specific capacity than the existing $Li_2NiO_2$ lithium-supplementing material. The second positive electrode material coordinates with the first positive electrode material of an olivine structure to make following improvements: on the one hand, the loss of active lithium caused by the formation of the SEI film is compensated for effectively during file-cycle charging of the battery by virtue of the second positive electrode material characterized by a high first-charge specific capacity and a low initial Coulombic efficiency. During the first discharge, sufficient lithium ions are intercalated back into the first positive electrode material, thereby increasing the energy density of the battery effectively. On the other hand, the first positive electrode material of an olivine structure in this application is structurally stable, little changes in volume during charging and discharging, and is excellent in cycle stability. Further, the applicant hereof finds that, by adding a specified amount of vinylene carbonate into the electrolyte solution, the electrolyte solution can be synergistic with the positive electrode plate containing the first positive electrode material and the second positive electrode material, so as to form a more uniform and denser SEI film at the negative electrode after the first-cycle charging, thereby suppressing continuous loss of active lithium and further improving the cycle life of the lithium-ion secondary battery. Therefore, the lithium-ion secondary battery according to this embodiment achieves a high energy density, good C-rate performance, and a long cycle life.

Specifically, this application relates to a lithium-ion secondary battery. The lithium-ion secondary battery includes a positive electrode plate, a negative electrode plate, a separator, and an electrolyte solution. The positive electrode plate includes a positive current collector and a positive electrode material layer disposed on at least one surface of the positive current collector.

The positive electrode material layer includes a first positive electrode material represented by the following General Formula (1) and a second positive electrode material represented by the following General Formula (2): The electrolyte solution includes vinylene carbonate.

A content of the vinylene carbonate based on a total mass of the electrolyte solution is greater than or equal to 0.1 wt% and less than or equal to 5 wt%.

$$Li_{1+x}Fe_yMn_zM_{1-y-z}PO_{4-t}A_t \qquad (1)$$

(In General Formula (1), M includes one or more of Ti, Zr, V, or Cr; A includes one or more of S, N, F, Cl, or Br; and x, y, z, and t satisfy: $-0.1 \leq x < 0.1$, $0 < y \leq 1$, $0 \leq z < 1$, $0 < y + z \leq 1$, and $0 \leq t < 0.2$.)

$$Li_{2+r}Ni_{0.5-p}Cu_{0.5-q}Ti_vN_{p+q-v}O_{2-s}B_s \qquad (2)$$

(In General Formula (2), N includes one or more of Mn, Fe, Co, Al, V, Cr, or Nb; B includes one or more of S, N, F, Cl, or Br; and r, p, q, v, and s satisfy: $-0.2 \leq r \leq 0.2$, $-0.5 < p < 0.5$, $-0.5 < q < 0.5$, $0 < v < 0.01$, $0 \leq p + q - v < 0.2$, and $0 \leq s < 0.2$.)

A lithium-ion battery, a battery module, a battery pack, and an electrical device of this application are described in detail below with due reference to drawings.

**Lithium-ion secondary battery**

A lithium-ion secondary battery is a battery that is reusable through activation of an active material in the lithium-ion battery by charging the battery that has been discharged. Generally, a lithium-ion secondary battery includes a positive electrode plate, a negative electrode plate, a separator, and an electrolyte solution. In a charge-and-discharge cycle of the battery, active ions are shuttled between the positive electrode plate and the negative electrode plate by intercalation and deintercalation. Disposed between the positive electrode plate and the negative electrode plate, the separator can isolate electrons to prevent an internal short circuit while allowing active ions to pass through the separator and move between the positive electrode and the negative electrode. The separator serves a separation function. The electrolyte solution serves to conduct ions between the positive electrode plate and the negative electrode plate.

**[Positive electrode plate]**

A positive electrode plate includes a positive current collector and a positive electrode material layer disposed on at least one surface of the positive current collector. As an example, the positive current collector includes two surfaces opposite to each other in a thickness direction of the current collector. The positive electrode material layer is disposed on any one or both of the two opposite surfaces of the positive current collector.

The positive electrode material layer includes a first positive electrode material represented by the following General Formula (1) and a second positive electrode material represented by the following General Formula (2):

$$Li_{1+x}Fe_yMn_zM_{1-y-z}PO_{4-t}A_t \qquad (1)$$

(In General Formula (1), M includes one or more of Ti, Zr, V, or Cr; A includes one or more of S, N, F, Cl, or Br; and x, y, z, and t satisfy: $-0.1 \le x < 0.1$, $0 < y \le 1$, $0 \le z < 1$, $0 < y + z \le 1$, and $0 \le t < 0.2$.)

$$Li_{2+r}Ni_{0.5-p}Cu_{0.5-q}Ti_vN_{p+q-v}O_{2-s}B_s \qquad (2)$$

(In General Formula (2), N includes one or more of Mn, Fe, Co, Al, V, Cr, or Nb; B includes one or more of S, N, F, Cl, or Br; and r, p, q, v, and s satisfy: $-0.2 \le r \le 0.2$, $-0.5 < p < 0.5$, $-0.5 < q < 0.5$, $0 < v < 0.01$, $0 \le p + q - v < 0.2$, and $0 \le s < 0.2$)

By letting the positive electrode material layer include both the first positive electrode material and the second positive electrode material, the lithium-ion secondary battery achieves a high energy density, good C-rate performance, and a long cycle life.

In general formula (1), x satisfies $-0.1 \le x < 0.1$. To further reduce the volume change during charging and discharging and further improve the cycle stability of the battery, x preferably falls within: $-0.1 \le x \le 0.05$, and more preferably falls within: $-0.05 \le x \le 0$. In addition, y satisfies: $0 < y \le 1$. To further improve the cycle stability of the battery, y preferably falls within: $0.5 \le y \le 1$, and more preferably falls within: $0.5 \le y \le 0.95$. Moreover, z satisfies: $0 \le z < 1$. To improve the cycle stability of the battery, z preferably falls within: $0 \le z \le 0.5$, and more preferably falls within: $0.025 \le z \le 0.45$.

In General Formula (1), M is one or more selected from Ti, Zr, V, or Cr. To be synergistic with the second positive electrode material and increase the energy density and cycle life of the lithium-ion secondary battery, M is preferably one or more selected from Ti, Zr, or V, and more preferably one or more selected from Ti or Zr. In addition, A includes one or more of S, N, F, Cl, or Br. To maintain excellent overall performance, A is preferably one or more selected from F, Cl, or Br, and more preferably is F. Moreover, t satisfies: $0 \le t < 0.2$. To maintain excellent overall performance, t preferably falls within: $0 \le t \le 0.05$.

In General Formula (1), y+z satisfies: $0 < y+z \le 1$. To be synergistic with the second positive electrode material and increase the energy density and cycle life of the lithium-ion secondary battery, y+z preferably falls within: $0.95 \le y+z \le 1$.

In General Formula (2), r satisfies: $-0.2 \le r \le 0.2$. To effectively compensate for the loss of active lithium caused by the formation of the SEI film and further increase the energy density of the battery, r preferably falls within: $-0.05 \le r \le 0.2$, and more preferably falls within: $0 \le r \le 0.2$. In addition, p satisfies: $-0.5 < p < 0.5$. To further increase the energy density of the battery, p preferably falls within: $-0.1 < p < 0.1$, more preferably falls within: $-0.046 \le p \le 0.058$, and even more preferably falls within: $0.002 \le p \le 0.054$. Moreover, q satisfies: $-0.5 < q < 0.5$. To effectively increase the energy density and cycle life of the battery, q preferably falls within: $-0.1 < q < 0.1$, more preferably falls within: $-0.046 \le q \le 0.058$, and even more preferably falls within: $0.002 \le q \le 0.054$. Further, v satisfies: $0 < v < 0.01$. To more effectively reduce the content of free lithium on the surface of the material, and more effectively alleviate the problem of gelation of the positive electrode slurry, and effectively increase the energy density of the battery, v preferably falls within: $0.002 \le v \le 0.008$, and more preferably falls within: $0.004 \le v \le 0.008$. Further, s satisfies: $0 \le s < 0.2$. To improve the cycle performance and energy density of the battery, s preferably falls within: $0 \le s \le 0.1$, and more preferably falls within: $0 \le s \le 0.05$.

In General Formula (2), N includes one or more of Mn, Fe, Co, Al, V, Cr, or Nb. To improve the C-rate performance and the cycle performance of the battery, N is preferably one or more selected from Mn, Fe, Co, or Cr, and more preferably one or more selected from Mn or Co. In addition, B includes one or more of S, N, F, Cl, or Br. To maintain excellent overall performance, B is preferably one or more selected from F, Cl, or Br, and more preferably is F.

In General Formula (2), p+q-v satisfies: $0 \le p + q - v < 0.2$. To improve the C-rate performance and cycle performance of the battery, p+q-v preferably satisfies: $0 \le p+q-v \le 0.1$.

In some embodiments, the positive electrode plate satisfies the following Formula (3):

$$0.5 \le R \cdot P/Q \le 16 \qquad (3)$$

(In Formula (3), R represents a resistance of the positive electrode plate, in units of $\Omega$; P represents a compaction density of the positive electrode plate, in units of $g/cm^3$; and Q represents a single-side areal density of the positive electrode plate, in units of $g/1540.25\ mm^2$.)

By making the positive electrode plate satisfy Formula (3) above, the energy density, C-rate performance, and cycle life of the lithium-ion secondary battery can be further improved.

In some embodiments, preferably, the positive electrode plate further satisfies the following Formula (4):

$$1.5 \leq R \cdot P/Q \leq 10 \qquad (4)$$

It is hereby noted that in this application, the calculation of R·P/Q involves only numerical calculation. For example, if the resistance R of the positive electrode is 0.5 Ω, the compaction density P is 2.2 g/cm$^3$, and the single-side areal density Q of the positive electrode is 0.3 g/1540.25 mm$^2$, then R·P/Q = 3.7.

In some embodiments, the resistance of the positive electrode plate satisfies: R ≤ 3 Ω, and preferably satisfies: R ≤ 1 Ω. By making the resistance of the positive electrode plate fall within the specified range, the cycle performance and C-rate performance of the lithium-ion secondary battery are prevented from being deteriorated by an excessive resistance of the positive electrode plate, thereby improving the cycle performance and C-rate performance of the lithium-ion secondary battery. In this application, the resistance R of the positive electrode plate is a value measured by using a direct-current two-probe method. The contact area between the probe and the positive electrode plate is 49 π mm$^2$. As an example, the upper and lower sides of the positive electrode plate are clamped between two conductive terminals (with a diameter of 14 mm) of an electrode plate resistance tester (Hioki BT23562 internal resistance tester manufactured by Hioki E.E. Corporation), and a pressure of 15 MPa to 27 MPa is applied to hold the electrode plate in place, so that the resistance of the positive electrode plate is measured by using the electrode plate resistance tester.

In some embodiments, the compaction density P of the positive electrode plate satisfies: 1.6 < P < 2.6 (in units of g/cm$^3$). By making the compaction density P of the positive electrode plate fall within the specified range, the cycle performance and C-rate performance of the battery are prevented from being deteriorated, thereby facilitating the migration of electrons and ions in the positive electrode plate, and improving the cycle performance of the lithium-ion secondary battery. In this application, the compaction density P of the positive electrode may be calculated by a formula P = m/v, where m is the mass of the positive electrode material layer in units of g, and v is the volume of the positive electrode material layer in units of cm$^3$. The volume v of the positive electrode material layer may be a product of the area Ar of the positive electrode material layer and the thickness of the positive electrode material layer.

In some embodiments, the single-side areal density Q of the positive electrode plate satisfies: 0.16 < Q < 0.45 (in units of g/1540.25 mm$^2$). By making the single-side areal density Q of the positive electrode plate fall within the specified range, an excessive single-side areal density of the positive electrode plate is avoided so as not to reduce the cycle life of the battery, impair the C-rate performance of the battery, or reduce the discharge capacity of the battery at a high C-rate; and a deficient single-side areal density of the positive electrode plate is avoided so as not to increase the lengths of the current collector and the separator or increase the internal resistance of the battery while achieving the same capacity of the battery, thereby improving the cycle performance and C-rate performance of the lithium-ion secondary battery while ensuring a high level of charge capacity and discharge capacity. In this application, the single-side areal density Q of the positive electrode plate may be calculated by a formula Q = 1540.25 m/Ar, where m is the mass of the positive electrode material layer, in units of g, and Ar is the area of the positive active material layer, in units of mm$^2$.

In some embodiments, a mass ratio between the first positive electrode material and the second positive electrode material is 5: 1 to 99: 1, preferably 9: 1 to 99: 1, and more preferably 10: 1 to 48: 1. By making the mass ratio between the first positive electrode material and the second positive electrode material fall within the specified range, the first positive electrode material accounts for a larger proportion of the combination of the first positive electrode material and the second positive electrode material, and the positive electrode plate is of higher structural stability, thereby reducing capacity loss and impedance increase caused by structural disruption of the positive electrode material, and maintaining a high level of cycle stability and kinetic performance.

In some embodiments, in the positive electrode material layer, a percentage by weight of the first positive electrode material is 80 wt% to 98 wt%, and preferably 85 wt% to 98 wt%. By making the weight percent of the first positive electrode material in the positive electrode material layer fall within the specified range, the positive electrode plate is of even higher structural stability, thereby further reducing capacity loss and impedance increase caused by structural disruption of the positive electrode material, and improving the cycle stability and kinetic performance.

In some embodiments, the crystal structure of the second positive electrode material belongs to an orthorhombic *Immm* space group. In some embodiments, in an X-ray diffraction pattern of the second positive electrode material after first-cycle charging, a characteristic diffraction peak A is exhibited at 36° to 38°, a characteristic diffraction peak B is exhibited at 42° to 44°, and a characteristic diffraction peak C is exhibited at 62° to 64°.

To the extent that the effect of this application is not impaired, the positive electrode material layer of this application may include other positive electrode materials such as lithium transition metal oxide in addition to the first positive electrode material and the second positive electrode material.

The positive electrode material layer of this application optionally includes a binder and a conductive agent.

The types of the conductive agent and binder are not particularly limited herein, and may be selected according to actual needs.

As an example, the binder may include one or more of styrene-butadiene rubber (SBR), water-based acrylic resin (water-based acrylic resin), carboxymethyl cellulose (CMC), polyvinylidene difluoride (PVDF), polytetrafluoroethylene (PTFE), polyvinyl butyral (PVB), poly(ethylene-co-vinyl acetate) (EVA), or polyvinyl alcohol (PVA). The conductive agent may include one or more of graphite, superconductive carbon, acetylene black, carbon black, Ketjen black, carbon dots, carbon nanotubes, graphene, or carbon nanofibers.

In some embodiments, the mass percent of the conductive agent in the positive electrode material layer is 0.5 wt% or above. By setting the mass percent of the conductive agent to fall within the above range, a relatively low resistance of the positive electrode plate can be achieved.

In some embodiments, the mass percent of the binder in the positive electrode material layer is 2.5 wt% or below. By setting the mass percent of the binder to fall within the above range, a relatively low resistance of the positive electrode plate can be achieved.

In the lithium-ion secondary battery of this application, the positive current collector may be a metal foil, a porous metal sheet, or a composite current collector. For example, the metal foil or porous metal sheet may be a foil or a porous sheet of metals such as aluminum, copper, nickel, titanium, silver, or an alloy thereof, and preferably an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, or silver alloy). The polymer material substrate may be, for example, polypropylene (PP), polyethylene terephthalate (PET), polybutylene terephthalate (PBT), polystyrene (PS), or polyethylene (PE). The thickness of the positive current collector is 5 μm to 20 μm, and preferably, 6 μm to 18 μm, and more preferably, 8 μm to 16 μm.

The positive electrode plate of this application may be prepared by a conventional method in this field. Specifically, the positive electrode plate may be prepared by the following method: dispersing the constituents of the positive electrode plate such as the first positive electrode material, the second positive electrode material, an optional conductive agent, an optional binder, and any other constituents into a solvent (such as N-methyl-pyrrolidone) to form a positive electrode slurry; coating a positive current collector with the positive electrode slurry, and performing steps such as oven-drying and cold pressing to obtain a positive electrode plate. Alternatively, the positive electrode plate may be manufactured by the following method: tape-casting a positive electrode slurry, which is prepared for forming a positive electrode material layer, onto a separate carrier, and then pressing a film, which is stripped off from the carrier, onto the positive current collector. In addition, in the above embodiment, the positive electrode slurry is prepared by directly mixing the first positive electrode material and the second positive electrode material. However, the slurry preparation method is not limited to this, but may be: blending the second positive electrode material separately to produce a slurry, and applying the slurry onto the upper or lower layer of the first positive electrode material.

**[Negative electrode plate]**

In the lithium-ion secondary battery, the negative electrode plate typically includes a negative current collector and a negative electrode material layer disposed on at least one surface of the negative current collector. For example, the negative current collector includes two surfaces opposite to each other in a thickness direction of the current collector. The negative electrode material layer is disposed on either or both of the two opposite surfaces of the negative current collector.

In the lithium-ion secondary battery of this application, the negative current collector may be a metal foil, a porous metal sheet, a composite current collector, or made of other materials. For example, the metal foil or porous metal sheet may be a foil or a porous sheet of metals such as copper, nickel, titanium, iron, or an alloy thereof, and preferably a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, or silver alloy). The polymer material substrate may be, for example, polypropylene (PP), polyethylene terephthalate (PET), polybutylene terephthalate (PBT), polystyrene (PS), or polyethylene (PE).

In the lithium-ion secondary battery of this application, the negative electrode material layer typically includes a negative electrode material, and optionally, a conductive agent, a binder, and a thickener.

The negative electrode material may be a negative electrode material commonly used for preparing a negative electrode of a lithium-ion secondary battery in this field. For example, the negative electrode material may be one or more of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, $SnO_2$, spinel-structured lithium titanium oxide $Li_4Ti_5O_{12}$, a Li-Al alloy, or metallic lithium.

As an example, the conductive agent may include one or more of graphite, superconductive carbon, acetylene black, carbon black, Ketjen black, carbon dots, carbon nanotubes, graphene, or carbon nanofibers.

As an example, the binder may include one or more of styrene-butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC).

As an example, the thickener may be carboxymethyl cellulose (CMC) or the like.

This application is not limited to such materials. This application may use other materials in addition to the materials that can be used as a negative electrode material, a conductive agent, a binder, and a thickener of a lithium-ion secondary battery.

The negative electrode plate of this application may be prepared by a conventional method in this field. Specifically, a method for preparing the negative electrode plate includes: dispersing the negative electrode material and optionally the conductive agent, binder, and thickener in a solvent to form a homogeneous negative electrode slurry, coating a negative current collector with the negative electrode slurry, and performing steps such as oven-drying and cold pressing to obtain a negative electrode. The solvent may be N-methyl-pyrrolidone (NMP), deionized water, or the like.

**[Electrolyte solution]**

The electrolyte solution of this application includes an organic solvent, an electrolyte lithium salt, and an additive. The types of the organic solvent and the electrolyte lithium salt are not particularly limited herein, and may be selected according to actual needs.

As an example, the solvent may be one or more, and preferably at least two, selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

As an example, the electrolyte lithium salt may be one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate ($LiPO_2F_2$), lithium difluoro(bisoxalato)phosphate (LiDFOP), or lithium tetrafluoro(oxalato)phosphate (LiTFOP).

The electrolyte solution of this application includes vinylene carbonate (VC) as an additive. A content of the vinylene carbonate based on a total mass of the electrolyte solution is greater than or equal to 0.1 wt% and less than or equal to 5 wt%. By adding a specified amount of vinylene carbonate as an additive into the electrolyte solution, the electrolyte solution can be synergistic with the positive electrode plate containing the first positive electrode material and the second positive electrode material, so as to form a more uniform and denser SEI film at the negative electrode after the first-cycle charging, thereby suppressing continuous loss of active lithium and further improving the cycle life of the lithium-ion secondary battery.

The electrolyte solution further optionally includes other additives. Without being limited herein, the types of other additives may be any additive suitable for use in a lithium-ion secondary battery and may be selected according to actual needs. As an example, the additives may include one or more of vinyl ethylene carbonate (VEC), succinonitrile (SN), adiponitrile (AND), 1,3-propene sultone (PST), sulfonate cyclic quaternary ammonium salt, tris(trimethylsilane)phosphate (TMSP), or tris(trimethylsilane)borate (TMSB).

The electrolyte solution may be prepared by a conventional method in this field. Specifically, the electrolyte solution may be obtained by mixing well an organic solvent, an electrolyte lithium salt, vinylene carbonate, and other optional additives. Specific order of adding the materials is not particularly limited. For example, the electrolyte solution may be obtained by adding an electrolyte lithium salt, vinylene carbonate, and other optional additives into an organic solvent and mixing the materials well. As an example, the electrolyte lithium salt is added into the organic solvent first, and then the vinylene carbonate and other optional additives are separately or simultaneously added into the organic solvent.

**[Separator]**

The type of the separator is not particularly limited herein, and may be any well-known porous separator that is stable both electrochemically and chemically for use in a lithium-ion secondary battery. For example, the separator may be a glass fiber film, non-woven fabric film, polyethylene film, polypropylene film, polyvinylidene difluoride film, or a multilayer composite film that contains one or at least two thereof, or any combination thereof.

In some embodiments, a method for preparing the lithium-ion secondary battery is: stacking the positive electrode plate, the separator, and the negative electrode plate in sequence to obtain an electrode assembly in which the separator is located between the positive electrode plate and the negative electrode plate to serve a separation function; and then placing the electrode assembly into an outer package, injecting an electrolyte solution, and sealing the package to obtain a lithium-ion secondary battery. The electrode assembly may be obtained by, instead of the stacking process, a winding process in which the positive electrode plate, the separator, and the negative electrode plate are wound.

In some embodiments, the outer package of the lithium-ion secondary battery may be a hard shell such as a hard plastic shell, an aluminum shell, a steel shell, or the like. Alternatively, the outer package of the lithium-ion secondary battery may be a soft package such as a pouch-type soft package. The material of the soft package may be plastic such as one or more of polypropylene (PP), polybutylene terephthalate (PBT), or polybutylene succinate (PBS).

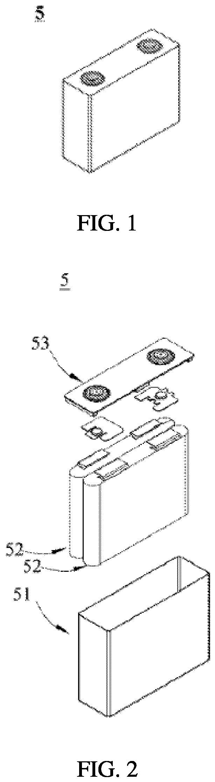

The shape of the lithium-ion secondary battery is not particularly limited in this application, and may be cylindrical, prismatic or any other shape. FIG. 1 shows a prismatic lithium-ion secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 contained in a lithium-ion secondary battery 5 may be one or more, and is adjustable as required.

In some embodiments, the lithium-ion secondary battery may be assembled to form a battery module. The battery module may contain a plurality of secondary batteries, and the specific number of secondary batteries in a battery module may be adjusted according to practical applications and capacity of the battery module.

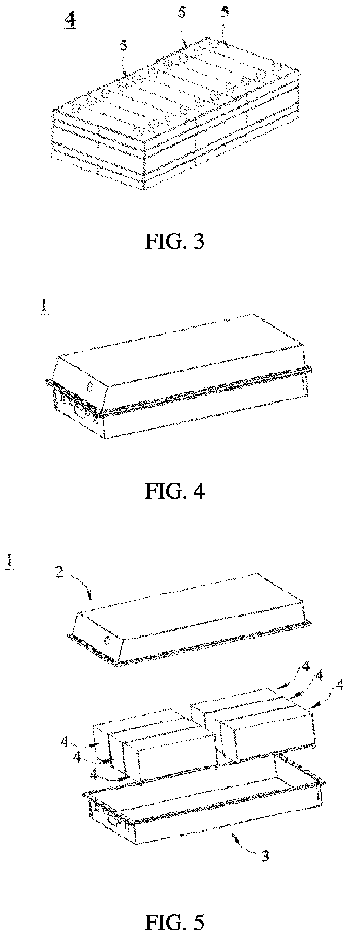

FIG. 3 shows a battery module 4 as an example. Referring to FIG. 3, in the battery module 4, a plurality of lithium-ion secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The number of the battery modules contained in a battery pack may be adjusted according to practical applications and the capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

**Device**

Another aspect of this application provides a device. The device includes at least one of the lithium-ion secondary battery, the battery module, or the battery pack according to this application. The lithium-ion secondary battery may be used as a power supply of the device, or used as an energy storage unit of the device. The device may be, but is not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

Depending on the use requirements of the device, the lithium-ion secondary battery, battery module, or battery pack may be selected for use in the device.

As an example, the device may be a mobile phone, a tablet computer, a laptop computer, or the like. The device is generally required to be thin and light, and may use a lithium-ion secondary battery as a power supply.

**Embodiments**

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**Embodiment 1**

(1) Preparing a positive electrode plate

Dissolving a first positive electrode material $LiFePO_4$, a second positive electrode material $Li_2Ni_{0.498}Cu_{0.498}Ti_{0.002}O_2$, a binder polyvinylidene difluoride (PVDF), a conductive agent carbon black at a mass ratio of 92.4: 4.0: 2.1: 1.5 in an N-methyl-pyrrolidone (NMP) solvent, and vacuum-mixing the mixture thoroughly until the mixture becomes a homogeneous transparent system to obtain a positive electrode slurry. Subsequently, coating a positive current collector aluminum foil with the positive electrode slurry evenly, transferring the coated current collector into an oven to dry the slurry at 120 °C, and then performing cold pressing and slitting to obtain a positive electrode. In the positive electrode material layer, the mass percent of the first positive electrode material $LiFePO_4$ is 92.4%, and the mass percent of the second positive electrode material $Li_2Ni_{0.498}Cu_{0.498}Ti_{0.002}O_2$ is 4.0%.

(2) Preparing a negative electrode plate

Dissolving artificial graphite as a negative electrode material, sodium carboxymethyl cellulose (CMC-Na) as a thickener, styrene-butadiene rubber (SBR), and carbon black as a conductive agent at a mass ratio of 95.7: 1.0: 1.8: 1.5 in deionized water, and mixing the mixture well with a vacuum mixer to obtain a negative electrode slurry. Subsequently, coating a negative current collector copper foil with the negative electrode slurry evenly, transferring the current collector into an oven to dry the slurry at 120 °C, and then performing cold pressing and slitting to obtain a negative electrode plate.

(3) Preparing an electrolyte solution

Mixing ethylene carbonate (EC), ethyl methyl carbonate (EMC), and diethyl carbonate (DEC) at a volume ratio of 1: 1: 1, and stirring the mixture well to obtain an organic solvent. Dissolving 1 mol/L $LiPF_6$ in the organic solvent, and then adding 3 wt% vinylene carbonate (VC), and stirring well to obtain an electrolyte solution, where the mass percent of the vinylene carbonate is a percentage by weight based on the total mass of the electrolyte solution.

(4) Preparing a separator: Using a 14 pm-thick polypropylene film (manufactured by Celgard) as a separator.

(5) Preparing a lithium-ion battery

Stacking the positive electrode plate, the separator, and the negative electrode plate in sequence in such a way that the separator is located between the positive electrode plate and the negative electrode plate to serve a separation function, and then winding the stacked structure to form an electrode assembly; welding tabs to the electrode assembly, placing the electrode assembly into a shell, injecting the electrolyte solution and sealing the opening, and then performing steps such as static standing, chemical formation, and shaping to obtain a lithium-ion secondary battery.

**Embodiments 2 to 21 and Comparative Embodiments 1 to 7**

The lithium-ion secondary battery is prepared in the same way as in Embodiment 1 except that the type of the first positive electrode material, the type of the second positive electrode material, and the content of the vinylene carbonate in the electrolyte solution are changed according to Table 1.

A performance test is performed by the following methods on the lithium-ion secondary batteries prepared in the above embodiments and comparative embodiments, and the test results obtained are shown in Table 1.

(1) Testing high-temperature cycle performance of the lithium-ion secondary battery

Charging a lithium-ion secondary battery at a constant current of 1 C rate at 60 °C until the voltage reaches 4.2 V, and then charging the battery at a constant voltage until the current is less than or equal to 0.05 C, and then discharging the battery at a constant current of 1 C until the voltage drops to 2.5 V, thereby completing one charge-discharge cycle. Recording the first-cycle discharge capacity of the lithium-ion secondary battery. Repeating the charge-discharge cycle for the lithium-ion secondary battery according to the foregoing steps, and recording the discharge capacity at the end of each cycle until the discharge capacity of the lithium-ion secondary battery fades to 80% of the first-cycle discharge capacity. Recording the number of charge-discharge cycles.

(2) Testing the C-rate performance of the lithium-ion secondary battery

Charging a lithium-ion secondary battery at a constant current rate of 0.5 C at 25 °C until the voltage reaches 4.2 V, and then charging the battery at a constant voltage until the current is less than or equal to 0.05 C, and then discharging the battery at a constant current rate of 0.5 C until the voltage reaches 2.5 V, and recording the 0.5 C-rate discharge capacity.

Charging the lithium-ion secondary battery at a constant current rate of 0.5 C at 25 °C until the voltage reaches 4.2 V, and then charging the battery at a constant voltage until the current is less than or equal to 0.05 C, and then discharging the battery at a constant current rate of 2 C until the voltage reaches 2.5 V, and recording the 2 C-rate discharge capacity.

Subsequently, calculating, by using the following formula, the 2 C-rate discharge capacity retention rate (%) of the lithium-ion secondary battery to characterize the C-rate performance (%) of the battery.

2 C-rate discharge capacity retention rate of the lithium-ion secondary battery (%) = 2 C-rate discharge capacity / 0.5 C-rate discharge capacity $\times$ 100%.

(3) Testing the energy density of the lithium-ion secondary battery

Charging a lithium-ion secondary battery at a constant current rate of 0.2 C at 25 °C until the voltage reaches 4.2 V, and then charging the battery at a constant voltage until the current is less than or equal to 0.05 C. Subsequently, leaving the battery to stand for 30 minutes, and then discharging the battery at a constant current rate of 0.2 C until the voltage reaches 2.5 V, and recording the 0.2 C-rate discharge capacity of the secondary lithium-ion battery as $D_0$ (Ah), and recording the discharge plateau as $V_0$ (V). Weighing the lithium-ion battery and recording the weight as $m_0$ (kg). Subsequently, calculating the energy density of the lithium-ion secondary battery (unit: Wh/Kg) by using the following formula:

$$\text{Energy density} = D_0 \times V_0/m_0.$$

(4) XRD pattern of the positive electrode plate of the lithium-ion secondary battery

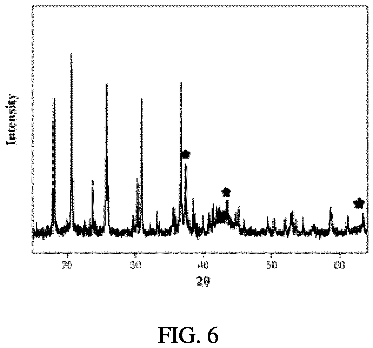

Charging the lithium-ion secondary battery, which is prepared in Embodiment 1, at a constant current rate of 1 C at 25 °C until the voltage reaches 4.2 V, and then charging the battery at a constant voltage until the current is less than or equal to 0.05 C. Disassembling the lithium-ion secondary battery charged for a first cycle, and taking out the positive electrode plate. Testing the positive electrode plate by using an X-ray diffractometer, and observing the resultant XRD pattern of the positive electrode plate after the first-cycle charging, as shown in FIG. 6.

As can be seen from FIG. 6, in the X-ray diffraction pattern after first-cycle charging, a characteristic diffraction peak is exhibited at 36° to 38°, a characteristic diffraction peak is exhibited at 42° to 44°, and a characteristic diffraction peak is exhibited at 62° to 64°. The characteristic diffraction peak is a characteristic peak of a rock-salt phase material. Therefore, it is confirmed that in the X-ray diffraction pattern of the second positive electrode material after first-cycle charging, a characteristic diffraction peak is exhibited at 36° to 38°, a characteristic diffraction peak is exhibited at 42° to 44°, and a characteristic diffraction peak is exhibited at 62° to 64°.

**Table 1**

| Serial number | Positive electrode material | Content of first positive electrode material (wt%) | Content of second positive electrode material (wt%) | Content of VC in electrolyte solution (wt%) | Number of high-temperature cycles | C-rate performance (%) | Energy density (Wh/kg) |
|---|---|---|---|---|---|---|---|
| Comparative Embodiment 1 | LiFePO$_4$ | 96.4 | / | 3 | 1450 | 98.4 | 162 |

(continued)

| Serial number | Positive electrode material | Content of first positive electrode material (wt%) | Content of second positive electrode material (wt%) | Content of VC in electrolyte solution (wt%) | Number of high-temperature cycles | C-rate performance (%) | Energy density (Wh/kg) |
|---|---|---|---|---|---|---|---|
| Comparative Embodiment 2 | $Li_2NiO_2$ | / | 96.4 | 3 | 1 | 74.6 | 140 |
| Comparative Embodiment 3 | $Li_2CuO_2$ | / | 96.4 | 3 | 1 | 75.4 | 138 |
| Comparative Embodiment 4 | $LiFePO_4/Li_2NiO_2$ | 92.4 | 4.0 | 3 | 2045 | 96.4 | 168 |
| Comparative Embodiment 5 | $LiFePO_4/Li_2Ni_{0.5}Cu_{0.5}O_2$ | 92.4 | 4.0 | 3 | 2089 | 96.5 | 169 |
| Comparative Embodiment 6 | $LiFePO_4/Li_2Ni_{0.498}Cu_{0.498}Ti_{0.002}O_2$ | 92.4 | 4.0 | 0 | 1035 | 98.1 | 171 |
| Comparative Embodiment 7 | $LiFePO_4/Li_2Ni_{0.498}Cu_{0.498}Ti_{0.002}O_2$ | 92.4 | 4.0 | 7 | 2001 | 96.7 | 171 |
| Embodiment 1 | $LiFePO_4/Li_2Ni_{0.498}Cu_{0.498}Ti_{0.002}O_2$ | 92.4 | 4.0 | 3 | 2331 | 97.1 | 172 |
| Embodiment 2 | $LiFe_{0.5}Mn_{0.5}PO_4/Li_2Ni_{0.498}Cu_{0.498}Ti_{0.002}O_2$ | 92.4 | 4.0 | 3 | 2219 | 96.9 | 189 |
| Embodiment 3 | $Li_{0.9}Fe_{0.5}Mn_{0.45}Ti_{0.05}PO_4/Li_2Ni_{0.498}Cu_{0.498}Ti_{0.002}O_2$ | 92.4 | 4.0 | 3 | 2267 | 96.9 | 190 |
| Embodiment 4 | $Li_{0.9}Fe_{0.5}Mn_{0.45}Ti_{0.04}Zr_{0.01}PO_4[Li_2Ni_{0.498}Cu_{0.498}Ti_{0.002}O_2$ | 92.4 | 4.0 | 3 | 2272 | 96.8 | 190 |
| Embodiment 5 | $Li_{0.95}FePO_{3.95}F_{0.05}/Li_2Ni_{0.498}Cu_{0.498}Ti_{0.002}O_2$ | 92.4 | 4.0 | 3 | 2265 | 97.0 | 171 |

(continued)

| Serial number | Positive electrode material | Content of first positive electrode material (wt%) | Content of second positive electrode material (wt%) | Content of VC in electrolyte solution (wt%) | Number of high-temperature cycles | C-rate performance (%) | Energy density (Wh/kg) |
|---|---|---|---|---|---|---|---|
| Embodiment 6 | $Li_{1.05}FePO_{3.95}N_{0.05}/Li_2Ni_{0.498}Cu_{0.498}Ti_{0.002}O_2$ | 92.4 | 4.0 | 3 | 2272 | 97.1 | 172 |
| Embodiment 7 | $LiFe_{0.95}PV_{0.0125}Cr_{0.0125}O_4/Li_2Ni_{0.498}Cu_{0.498}Ti_{0.002}O_2$ | 92.4 | 4.0 | 3 | 2283 | 97.0 | 171 |
| Embodiment 8 | $LiFePO_4/Li_2Ni_{0.446}Cu_{0.446}Ti_{0.004}Mn_{0.1}O_2$ | 92.4 | 4.0 | 3 | 2289 | 97.1 | 173 |
| Embodiment 9 | $LiFePO_4/Li_2Ni_{0.442}Cu_{0.442}Ti_{0.008}Mn_{0.05}Co_{0.05}O_2$ | 92.4 | 4.0 | 3 | 2298 | 97.3 | 172 |
| Embodiment 10 | $LiFePO_4/Li_{1.95}Ni_{0.498}Cu_{0.498}Ti_{0.002}O_{1.95}F_{0.05}$ | 92.4 | 4.0 | 3 | 2272 | 96.8 | 171 |
| Embodiment 11 | $LiFePO_4/Li_{1.95}Ni_{0.498}Cu_{0.498}Ti_{0.002}O_{1.9}S_{0.05}F_{0.05}$ | 92.4 | 4.0 | 3 | 2278 | 97.0 | 172 |
| Embodiment 12 | $LiFePO_4/Li_{1.8}Ni_{0.546}Cu_{0.546}Ti_{0.004}O_2$ | 92.4 | 4.0 | 3 | 2208 | 96.9 | 170 |
| Embodiment 13 | $LiFePO_4/Li_{2.2}Ni_{0.446}Cu_{0.446}Ti_{0.004}O_2$ | 92.4 | 4.0 | 3 | 2319 | 97.2 | 172 |

(continued)

| Serial number | Positive electrode material | Content of first positive electrode material (wt%) | Content of second positive electrode material (wt%) | Content of VC in electrolyte solution (wt%) | Number of high-temperature cycles | C-rate performance (%) | Energy density (Wh/kg) |
|---|---|---|---|---|---|---|---|
| Embodiment 13 | $LiFePO_4/Li_2Ni_{0.4965}Cu_{0.4965}Ti_{0.002}Al_{0.002}O_2$ | 92.4 | 4.0 | 3 | 2269 | 97.0 | 171 |
| Embodiment 15 | $LiFePO_4/Li_2Ni_{0.4955}Cu_{0.4955}Ti_{0.002}V_{0.002}O_2$ | 92.4 | 4.0 | 3 | 2291 | 97.1 | 171 |
| Embodiment 16 | $LiFePO_4/Li_2Ni_{0.498}Cu_{0.497}Ti_{0.002}Fe_{0.002}O_2$ | 92.4 | 4.0 | 3 | 2256 | 96.9 | 170 |
| Embodiment 17 | $LiFePO_4/Li_2Ni_{0.498}Cu_{0.4965}Ti_{0.002}Cr_{0.002}O_2$ | 92.4 | 4.0 | 3 | 2264 | 97.2 | 170 |
| Embodiment 18 | $LiFePO_4/Li_2Ni_{0.498}Cu_{0.498}Ti_{0.002}O_2$ | 94.4 | 2.0 | 3 | 2092 | 97.8 | 167 |
| Embodiment 19 | $LiFePO_4/Li_2Ni_{0.498}Cu_{0.498}Ti_{0.002}O_2$ | 88.4 | 8.0 | 3 | 2568 | 96.2 | 175 |
| Embodiment 20 | $LiFePO_4/Li_2Ni_{0.498}Cu_{0.498}Ti_{0.002}O_2$ | 92.4 | 4.0 | 0.1 | 2210 | 97.2 | 172 |
| Embodiment 21 | $LiFePO_4/Li_2Ni_{0.498}Cu_{0.498}Ti_{0.002}O_2$ | 92.4 | 4.0 | 5 | 2359 | 97.0 | 171 |

As can be seen from Table 1 above, in Embodiments 1 to 21 in which the positive electrode material layer includes both the first positive electrode material and the second positive electrode material of this application, the lithium-ion secondary battery achieves a high energy density, good C-rate performance, and a long cycle life concurrently. By contrast, in Comparative Embodiments 1 to 5 in which the positive electrode material layer does not include the first positive electrode material or the second positive electrode material of this application, the energy density of the lithium-ion secondary battery is decreased, and the number of high-temperature cycles of the battery is reduced. Further, by adding a specified amount of vinylene carbonate as an additive into the electrolyte solution, a denser and thinner SEI film is induced to be generated, thereby preventing continuous consumption of the electrolyte solution, and further improving the cycle life of the lithium-ion secondary battery.

**Embodiments 22 to 27**

Similar to the preparation method in Embodiment 1 except the differences shown in Table 2 below.

In addition, the performance of the prepared lithium-ion secondary battery is tested by the foregoing battery performance test method. The test results are shown in Table 2.

Further, the film resistance of the positive electrode plate is measured by the method to be described below. Moreover, the compaction density and single-side areal density of the positive electrode plate are calculated by the method to be described below.

(1) Film resistance R of the positive electrode plate

Measuring the resistance of the positive electrode plate by using a Hioki BT3562 resistance tester. Specifically, clamping the positive electrode plate between two conductive terminals (14 mm in diameter) of the internal resistance tester, and applying a pressure of 15 MPa to 27 MPa to fix the electrode plate, and measuring the resistance R of the positive electrode plate by sampling the resistance values at intervals of 5 s to 17 s.

(2) Compaction density P of the positive electrode plate

Calculating the compaction density P of the positive electrode by using a formula $P = m/v$, where m is the mass of the positive electrode material layer in units of g, and v is the volume of the positive electrode material layer in units of $cm^3$. The volume v of the positive electrode material layer is obtained by calculating a product of the area Ar of the positive electrode material layer and the thickness of the positive electrode material layer.

(3) Single-side areal density Q of the positive electrode plate

The single-side areal density Q of the positive electrode plate is calculated by a formula $Q = 1540.25\ m/Ar$, where m is the mass of the positive electrode material layer, in units of g, and Ar is the area of the positive active material layer, in units of $mm^2$.

**Table 2**

| Serial number | Positive electrode material | Film resistance R of positive electrode plate ($\Omega$) | Compaction density P of positive electrode plate ($g/cm^3$) | Single-side areal density Q of positive electrode plate (g/ 1540.25 $mm^2$) | R·P/Q | Number of high-temperature cycles | C-rate performance (%) | Energy density (Wh/kg) |
|---|---|---|---|---|---|---|---|---|
| Embodiment 22 | $LiFePO_4/Li_2Ni_{0.498}Cu_{0.498}Ti_{0.002}O_2$ | 0.1 | 1.6 | 0.45 | 0.36 | 1835 | 94.7 | 172 |
| Embodiment 23 | $LiFePO_4/Li_2Ni_{0.498}Cu_{0.498}Ti_{0.002}O_2$ | 0.08 | 2.5 | 0.28 | 0.71 | 2212 | 97.1 | 171 |
| Embodiment 24 | $LiFePO_4/Li_2Ni_{0.498}Cu_{0.498}Ti_{0.002}O_2$ | 0.25 | 2.2 | 0.33 | 1.67 | 2270 | 97.1 | 176 |

(continued)

| Serial number | Positive electrode material | Film resistance R of positive electrode plate ($\Omega$) | Compaction density P of positive electrode plate (g/cm$^3$) | Single-side areal density Q of positive electrode plate (g/ 1540.25 mm$^2$) | R·P/Q | Number of high-temperature cycles | C-rate performance (%) | Energy density (Wh/kg) |
|---|---|---|---|---|---|---|---|---|
| Embodiment 25 | LiFePO$_4$/Li$_2$Ni$_{0.498}$Cu$_{0.498}$Ti$_{0.002}$O$_2$ | 0.88 | 2.2 | 0.22 | 8.80 | 2296 | 97.2 | 164 |
| Embodiment 26 | LiFePO$_4$/Li$_2$Ni$_{0.498}$Cu$_{0.498}$Ti$_{0.002}$O$_2$ | 1.7 | 2.4 | 0.27 | 15.10 | 2043 | 96.5 | 171 |
| Embodiment 27 | LiFePO$_4$/Li$_2$Ni$_{0.498}$Cu$_{0.498}$Ti$_{0.002}$O$_2$ | 2.0 | 2.4 | 0.26 | 18.46 | 1961 | 96.3 | 170 |

As can be seen from Table 2 above, by making the positive electrode plate satisfy $0.5 \leq R·P/Q \leq 16$, the energy density, C-rate performance, and cycle life of the lithium-ion secondary battery can be further improved. In addition, by making the positive electrode plate further satisfy $1.5 \leq R·P/Q \leq 10$, the energy density, C-rate performance, and cycle life of the lithium-ion secondary battery can be even further improved.

A person of ordinary skill in the art understands that the embodiments described above are merely a part of exemplary embodiments for implementing this application. In practical applications, a variety of variations and modifications may be made in form and detail to the embodiments, and such variations and modifications still fall within the protection scope of this application.

**Claims**

1. A lithium-ion secondary battery, comprising a positive electrode plate, a negative electrode plate, a separator, and an electrolyte solution, wherein the positive electrode plate comprises a positive current collector and a positive electrode material layer disposed on at least one surface of the positive current collector;

the positive electrode material layer comprises a first positive electrode material represented by the following General Formula (1) and a second positive electrode material represented by the following General Formula (2):

$$Li_{1+x}Fe_yMn_zM_{1-y-z}PO_{4-t}A_t \qquad (1)$$

in General Formula (1), M comprises one or more of Ti, Zr, V, or Cr; A comprises one or more of S, N, F, Cl, or Br; and x, y, z, and t satisfy: $-0.1 \leq x < 0.1$, $0 < y \leq 1$, $0 \leq z < 1$, $0 < y + z \leq 1$, and $0 \leq t < 0.2$.

$$Li_{2+r}Ni_{0.5-p}Cu_{0.5-q}Ti_vN_{p+q-v}O_{2-s}B_s \qquad (2)$$

in General Formula (2), N comprises one or more of Mn, Fe, Co, Al, V, Cr, or Nb; B comprises one or more of S, N, F, Cl, or Br; and r, p, q, v, and s satisfy: $-0.2 \leq r \leq 0.2$, $-0.5 < p < 0.5$, $-0.5 < q < 0.5$, $0 < v < 0.01$, $0 \leq p +$

q - v < 0.2, and $0 \leq s < 0.2$;
the electrolyte solution comprises vinylene carbonate; and
a content of the vinylene carbonate based on a total mass of the electrolyte solution is greater than or equal to 0.1 wt% and less than or equal to 5 wt%.

2.  The lithium-ion secondary battery according to claim 1, **characterized in that**
    in General Formula (2), $-0.1 < p < 0.1$, $-0.1 < q < 0.1$, and $0.002 \leq v \leq 0.008$.

3.  The lithium-ion secondary battery according to claim 1 or 2, **characterized in that**

    the positive electrode plate satisfies the following Formula (3):

$$0.5 \leq R \cdot P/Q \leq 16 \qquad (3)$$

in Formula (3), R represents a resistance of the positive electrode plate, in units of $\Omega$; P represents a compaction density of the positive electrode plate, in units of $g/cm^3$; and Q represents a single-side areal density of the positive electrode plate, in units of $g/1540.25\ mm^2$.

4.  The lithium-ion secondary battery according to claim 3, **characterized in that** the positive electrode plate satisfies at least one of the following conditions:

    (1) the positive electrode plate satisfies the following Formula (4):

$$1.5 \leq R \cdot P/Q \leq 10 \qquad (4);$$

(2) the resistance of the positive electrode plate satisfies: $R \leq 3\ \Omega$, and optionally satisfies: $R < 1\ \Omega$;
(3) the compaction density P of the positive electrode plate satisfies: $1.6\ g/cm^3 < P < 2.6\ g/cm^3$; or
(4) the single-side areal density Q of the positive electrode plate satisfies: $0.16\ g/1540.25\ mm^2 < Q < 0.45\ g/1540.25\ mm^2$.

5.  The lithium-ion secondary battery according to any one of claims 1 to 4, **characterized in that**
    the first positive electrode material and the second positive electrode material satisfy at least one of the following conditions:

    (I) a mass ratio between the first positive electrode material and the second positive electrode material is 5: 1 to 99: 1, and optionally 9: 1 to 99: 1; or
    (II) in the positive electrode material layer, a percentage by weight of the first positive electrode material is 80 wt% to 98 wt%, and optionally 85 wt% to 98 wt%.

6.  The lithium-ion secondary battery according to any one of claims 1 to 5, **characterized in that**
    a crystal structure of the second positive electrode material belongs to an *Immm* space group.

7.  The lithium-ion secondary battery according to any one of claims 1 to 6, **characterized in that**
    in an X-ray diffraction pattern of the second positive electrode material after first-cycle charging, a characteristic diffraction peak A is exhibited at 36° to 38°, a characteristic diffraction peak B is exhibited at 42° to 44°, and a characteristic diffraction peak C is exhibited at 62° to 64°.

8.  A battery module, comprising the lithium-ion secondary battery according to any one of claims 1 to 7.

9.  A battery pack, comprising the battery module according to claim 8.

10. An electrical device, comprising at least one of the lithium-ion secondary battery according to any one of claims 1 to 7, the battery module according to claim 8, or the battery pack according to claim 9.

5

FIG. 1

5

FIG. 2

FIG. 3

FIG. 4

FIG. 5

FIG. 6

## INTERNATIONAL SEARCH REPORT

| International application No. |
|---|
| **PCT/CN2021/131275** |

### A. CLASSIFICATION OF SUBJECT MATTER

H01M 4/58(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 电池, 正极, 磷酸铁锂, 磷酸亚铁锂, 磷酸锰铁锂, 磷酸铁锰锂, 锂铁磷酸盐, 补锂, 镍酸锂, 电解液, 碳酸亚乙烯酯, battery, cathode, positive, LiFePO4, LiFe1-xMnxPO4, lithium, suppl+, Li2NiO2, Li2Ni0.5Cu0.5O2, electrolyte, VC

### C. DOCUMENTS CONSIDERED TO BE RELEVANT

| Category* | Citation of document, with indication, where appropriate, of the relevant passages | Relevant to claim No. |
|---|---|---|
| Y | CN 107706351 A (SHENZHEN CITY BATTERY NANOMETER TECHNOLOGY CO., LTD.) 16 February 2018 (2018-02-16) description, paragraphs 7-50 and 78-106 | 1-10 |
| Y | CN 110573459 A (LG CHEMICAL LTD.) 13 December 2019 (2019-12-13) description, paragraphs 5-41 and 67 | 1-10 |
| A | CN 1518777 A (LG CHEMICAL LTD.) 04 August 2004 (2004-08-04) entire document | 1-10 |
| A | CN 101164186 A (LG CHEMICAL LTD.) 16 April 2008 (2008-04-16) entire document | 1-10 |
| A | CN 111653770 A (GUANGDONG BRUNP RECYCLING TECHNOLOGY CO., LTD. et al.) 11 September 2020 (2020-09-11) entire document | 1-10 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 July 2022** | **22 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="4" align="center">INTERNATIONAL SEARCH REPORT<br>Information on patent family members</td><td colspan="2">International application No.<br>**PCT/CN2021/131275**</td></tr>
<tr><td colspan="2" align="center">Patent document<br>cited in search report</td><td align="center">Publication date<br>(day/month/year)</td><td colspan="2" align="center">Patent family member(s)</td><td align="center">Publication date<br>(day/month/year)</td></tr>
<tr><td>CN</td><td>107706351 A</td><td>16 February 2018</td><td colspan="2" align="center">None</td><td></td></tr>
<tr><td>CN</td><td>110573459 A</td><td>13 December 2019</td><td>KR</td><td>20190059242 A</td><td>30 May 2019</td></tr>
<tr><td></td><td></td><td></td><td>EP</td><td>3608293 A2</td><td>12 February 2020</td></tr>
<tr><td></td><td></td><td></td><td>US</td><td>2020176754 A1</td><td>04 June 2020</td></tr>
<tr><td></td><td></td><td></td><td>JP</td><td>2020518967 A</td><td>25 June 2020</td></tr>
<tr><td></td><td></td><td></td><td>WO</td><td>2019103459 A2</td><td>31 May 2019</td></tr>
<tr><td></td><td></td><td></td><td>WO</td><td>2019103459 A3</td><td>18 July 2019</td></tr>
<tr><td></td><td></td><td></td><td>EP</td><td>3608293 A4</td><td>06 May 2020</td></tr>
<tr><td>CN</td><td>1518777 A</td><td>04 August 2004</td><td>EP</td><td>1490916 A1</td><td>29 December 2004</td></tr>
<tr><td></td><td></td><td></td><td>US</td><td>2004157124 A1</td><td>12 August 2004</td></tr>
<tr><td></td><td></td><td></td><td>JP</td><td>2005521220 A</td><td>14 July 2005</td></tr>
<tr><td></td><td></td><td></td><td>WO</td><td>03081697 A1</td><td>02 October 2003</td></tr>
<tr><td></td><td></td><td></td><td>KR</td><td>20030076153 A</td><td>26 September 2003</td></tr>
<tr><td></td><td></td><td></td><td>KR</td><td>484713 B1</td><td>22 April 2005</td></tr>
<tr><td></td><td></td><td></td><td>CN</td><td>1234179 C</td><td>28 December 2005</td></tr>
<tr><td></td><td></td><td></td><td>US</td><td>7282300 B2</td><td>16 October 2007</td></tr>
<tr><td></td><td></td><td></td><td>US</td><td>2010203386 A1</td><td>12 August 2010</td></tr>
<tr><td></td><td></td><td></td><td>US</td><td>2013011727 A1</td><td>10 January 2013</td></tr>
<tr><td></td><td></td><td></td><td>US</td><td>2014315078 A1</td><td>23 October 2014</td></tr>
<tr><td></td><td></td><td></td><td>EP</td><td>1490916 B1</td><td>08 April 2015</td></tr>
<tr><td></td><td></td><td></td><td>US</td><td>9023525 B2</td><td>05 May 2015</td></tr>
<tr><td></td><td></td><td></td><td>US</td><td>9236610 B2</td><td>12 January 2016</td></tr>
<tr><td>CN</td><td>101164186 A</td><td>16 April 2008</td><td>KR</td><td>20060111393 A</td><td>27 October 2006</td></tr>
<tr><td></td><td></td><td></td><td>WO</td><td>2006112674 A1</td><td>26 October 2006</td></tr>
<tr><td></td><td></td><td></td><td>US</td><td>2006257737 A1</td><td>16 November 2006</td></tr>
<tr><td></td><td></td><td></td><td>JP</td><td>2008547156 A</td><td>25 December 2008</td></tr>
<tr><td></td><td></td><td></td><td>EP</td><td>1880436 A1</td><td>23 January 2008</td></tr>
<tr><td></td><td></td><td></td><td>TW</td><td>200705737 A</td><td>01 February 2007</td></tr>
<tr><td></td><td></td><td></td><td>EP</td><td>1880436 A4</td><td>19 November 2008</td></tr>
<tr><td></td><td></td><td></td><td>CN</td><td>101164186 B</td><td>26 May 2010</td></tr>
<tr><td></td><td></td><td></td><td>TW</td><td>I362136 B</td><td>11 April 2012</td></tr>
<tr><td></td><td></td><td></td><td>JP</td><td>5318565 B2</td><td>16 October 2013</td></tr>
<tr><td></td><td></td><td></td><td>US</td><td>8846250 B2</td><td>30 September 2014</td></tr>
<tr><td></td><td></td><td></td><td>EP</td><td>1880436 B1</td><td>19 July 2017</td></tr>
<tr><td>CN</td><td>111653770 A</td><td>11 September 2020</td><td colspan="2" align="center">None</td><td></td></tr>
</table>

Form PCT/ISA/210 (patent family annex) (January 2015)

**EP 4 421 916 A1**

**Patent documents cited in the description**

- CN 104037418 A